# EUROPEAN PATENT SPECIFICATION

(11) **EP 2 899 434 B1**
(45) Date of publication and mention of the grant of the patent: **14.06.2017**
(21) Application number: 15152602.7
(22) Date of filing: 27.01.2015
(51) Int. Cl.: F16J 15/02, F02F 7/00, F16J 15/06, F16J 15/10, F02B 61/02, F01M 13/04

(54) **Gasket structure in internal combustion engine**
Dichtungsanordnung in einer Brennkraftmaschine
Structure de joint d'étanchéité d'un moteur à combustion interne

(30) Priority: 27.01.2014 JP 2014012240
(43) Date of publication of application: 29.07.2015
(73) Proprietor: HONDA MOTOR CO., LTD., Tokyo, 107-8556 (JP); Ohtsuka Poly-Tech Co., Ltd., Saitama (JP)
(72) Inventor: Takeichi, Kayoko, Saitama, 351-0193 (JP); Takahashi, Ryota, Saitama, 351-0193 (JP); Sugio, Daisuke, Saitama, 351-0193 (JP); Terada, Yasuo, Saitama, 351-0193 (JP); Yokoyama, Hiroyuki, Saitama, 351-0193 (JP); Nakano, Yasuhiko, Saitama, 351-0193 (JP); Kuramitsu, Tomofumi, Saitama, 351-0193 (JP); Uchida, Yoshitaka, Saitama (JP)
(74) Representative: Brevalex

(56) References cited:
- EP-A2- 1 288 476
- JP-A- H02 130 208
- JP-A- 2002 071 024
- JP-A- 2003 269 613
- JP-U- H0 341 261

## Description

### [TECHNICAL FIELD]

The present invention relates to an internal combustion engine in which a gasket inserted into an insertion groove formed in one of mating surfaces of a cylinder head and a head cover which constitute a part of an engine main body and are joined to each other, is clamped between the cylinder head and the head cover so that the gasket is close contact with the other of the mating surfaces of the cylinder head and the head cover, in particular, relates to an improvement of the gasket clamped between the cylinder head and the head cover.

### [BACKGROUND ART]

As disclosed in Patent Document 1, there has been known an internal combustion engine in which a gasket is clamped between a cylinder head and a head cover, the gasket integrally including an insertion portion inserted into an insertion groove formed in one of mating surfaces of the cylinder head and the head cover, and a flange portion continued from the insertion portion and extending in an inward direction and an outward direction of the cylinder head and the head cover to come into close contact with the other one of the mating surfaces. In this gasket, the flange portion is formed to extend by equal distances from the insertion portion in both the inward direction and the outward direction.
Patent Document 2 and Patent Document 3 also disclose an internal combustion engine in which a gasket is clamped between a cylinder head and a head cover.

### [PRIOR ART DOCUMENT]

### [PATENT DOCUMENT]

[Patent Document 1] Japanese Patent Application Laid-open No. 2003-269613
[Patent Document 2] Japanese Patent Application Laid-open No. H02-130208
[Patent Document 3] Japanese Patent Application Laid-open No. 2002-071024

### [SUMMARY OF THE INVENTION]

### [PROBLEM TO BE SOLVED BY THE INVENTION]

An internal combustion engine is configured to discharge a blowby gas and the like generated therein to an air cleaner or the like. However, there is a case where pressure inside an engine main body is undesirably increased when smooth discharge of the blowby gas is made difficult for some reasons. To address this case, the gasket is desired to have pressure resistance high enough to secure seal performance of the gasket. In some cases, a head cover is made of a resin, in particular, for the purpose of weight reduction. When the pressure inside the engine main body increases, the resin head cover is more likely to have deformation such as flexure or the like than a metallic head cover. If the head cover is deformed, contact pressure of the gasket is lowered and the seal performance is difficult to secure.

The present invention has been made in view of the foregoing circumstances, and has an object to provide a gasket structure in an internal combustion engine, which is designed to achieve higher pressure resistance of a gasket provided between a cylinder head and a head cover.

### [MEANS TO SOLVE THE PROBLEMS]

In order to achieve the object, according to a first aspect of the present invention, in an internal combustion engine in which a gasket inserted into an insertion groove formed in one of mating surfaces of a cylinder head and a head cover which constitute a part of an engine main body and are joined to each other, is clamped between the cylinder head and the head cover so that the gasket is in close contact with the other of the mating surfaces of the cylinder head and the head cover, there is provided a gasket structure which is characterized in that the gasket comprises an insertion portion and a flange portion which are integrally formed, the insertion portion inserted into the insertion groove with one end part of the insertion portion being in contact with a closed end wall of the insertion groove, the flange portion continued from another end part of the insertion portion and coming into close contact with the other mating surface, the flange portion including: an inner flange section extending toward an inner side of the cylinder head and the head cover from a virtual line which passes through a widthwise center of the insertion portion and extends in parallel with a clamping direction of the gasket; and an outer flange section extending toward an outer side of the cylinder head and the head cover from the virtual line, and an extension length of the inner flange section from the virtual line is set to be larger than an extension length of the outer flange section from the virtual line.

Further, still according to the first aspect of the present invention, the inner flange section is provided with a first inner seal protrusion protruding toward the other mating surface, the outer flange section is provided with an outer seal protrusion protruding toward the other mating surface, distances between the virtual line, and the first inner seal protrusion and the outer seal protrusion are set to be substantially equal to each other, and a distance from the first inner seal protrusion to a tip end of the inner flange section is set to be larger than a distance from the outer seal protrusion to a tip end of the outer flange section.

And still further according to the first aspect of the present invention, a tip end part of the inner flange section is provided with a second inner seal protrusion protruding toward the other mating surface, and a recess portion recessed in a direction away from the other mating surface is formed in the inner flange section between the first inner seal protrusion and the second inner seal protrusion.

According to a second aspect of the present invention, in addition to the configuration of the first aspect, the recess portion is formed to be recessed more deeply than a center recess portion formed in the flange portion between the first inner seal protrusion and the outer seal protrusion.

According to a third aspect of the present invention, in addition to any one of the configurations of the first or second aspects, the head cover is made of a resin.

According to a fourth aspect of the present invention, in addition to any one of the configurations of the first to third aspects, a tip end part of the inner flange section is placed outside inner wall surfaces of the cylinder head and the head cover in a state where the gasket is clamped between the cylinder head and the head cover.

According to a fifth aspect of the present invention, in addition to any one of the configurations of the first to third aspects, a tip end part of the inner flange section is placed outside an inner wall surface of the cylinder head and inside an inner wall surface of the head cover in a state where the gasket is clamped between the cylinder head and the head cover.

According to an sixth aspect of the present invention, in addition to any one of the configurations of the first to third aspects, a tip end part of the inner flange section is placed inside an inner wall surface of the cylinder head and outside an inner wall surface of the head cover in a state where the gasket is clamped between the cylinder head and the head cover.

According to a seventh aspect of the present invention, in addition to any one of the configurations of the first to third aspects, a tip end part of the inner flange section is placed inside inner wall surfaces of the cylinder head and the head cover in a state where the gasket is clamped between the cylinder head and the head cover.

### [EFFECTS OF THE INVENTION]

According to the first aspect of the present invention, in the flange portion of the gasket, the inner flange section is formed to be relatively large in length, that is, is longer than the outer flange section. Thus, even if an undesired increase in pressure inside the engine main body causes a force for pushing outward to act on the gasket, the inner flange section can maintain its seal performance effectively by being kept in close contact with the other mating surface. In other words, this structure makes it possible to enlarge an area in the gasket capable of coming into close contact with the other mating surface, and thereby to secure and maintain the seal performance even if the head cover and the gasket are deformed by a certain factor such as internal pressure, aging or the like. Thus, the pressure resistance of the gasket can be enhanced.

According to the first aspect of the present invention, the first inner seal protrusion provided to the inner flange section in the protruding manner and the outer seal protrusion provided to the outer flange section in the protruding manner are placed at substantially equal distances from the insertion portion. Thus, while the gasket is normally clamped between the cylinder head and the head cover, the first inner seal protrusion and the outer seal protrusion secure the seal performance equal between the inside and the outside of the insertion portion and thereby achieve the sealing with high contact pressure. On the other hand, when an undesired increase in the internal pressure of the engine main body causes a force for pushing outward to act on the gasket, the relatively long area from the first inner seal protrusion to the tip end of the inner flange section comes into close contact with the other mating surface and secures the seal performance.

According to the first aspect of the present invention, the tip end part of the inner flange section is provided with the second inner seal protrusion protruding and forming the recess portion in the inner flange section between the first inner seal protrusion and the second inner seal protrusion. Thus, when the gasket is deformed outward because a force for pushing outward acts thereon due to an undesired increase in the internal pressure of the engine main body, the recess potion thus formed produces the following effects: the inner flange section can be flexibly bent to easily bring the second inner seal protrusion into close contact with the other mating surface; and the inner flange section, having a smaller contact area with the other mating surface, can increase the contact pressure and thereby maintain the seal performance favorably.

According to the second aspect of the present invention, the recess portion between the first and second inner seal protrusions is deeper than the center recess portion between the first inner seal protrusion and the outer seal protrusion. This structure enables more flexible bending of the tip end side of the inner flange section, so that it is easier to bring the second inner seal protrusion into close contact with the other mating surface. Moreover, in a state where the gasket is deformed outward, that structure also facilitates formation of a space between the first and second inner seal protrusions, and thereby further reduces the contact area of the inner flange section with the other mating surface to increase the contact pressure, so that the seal performance can be maintained more favorably.

According to the third aspect of the present invention, since the head cover is made of the synthetic resin, the head cover and accordingly the engine main body can be reduced in weight. Meanwhile, although use of a resin material may cause influence such as deformation or the like of the head cover, the seal performance of the gasket can be effectively secured against such an influence.

According to the fourth aspect of the present invention, the tip end part of the inner flange section is placed outside the inner wall surfaces of the cylinder head and the head cover while the gasket is clamped between the cylinder head and the head cover. Thus, the gasket can be prevented from interfering with a valve train and the like inside the engine main body, and from influencing flows of oil running on the inner wall surfaces of the head cover and the cylinder head.

According to the fifth aspect of the present invention, the tip end part of the inner flange section is placed outside the inner wall surface of the cylinder head and inside the inner wall surface of the head cover in the state where the gasket is clamped between the cylinder head and the head cover. With this structure, when the gasket is deformed outward because a force for pushing outward acts thereon due to an undesired increase in the internal pressure of the engine main body, the tip end part of the inner flange section is pressed against the cylinder head, so that the seal performance can be enhanced.

According to the sixth aspect of the present invention, the tip end part of the inner flange section is placed inside the inner wall surface of the cylinder head and outside the inner wall surface of the head cover in the state where the gasket is clamped between the cylinder head and the head cover. With this structure, when the gasket is deformed outward because a force for pushing outward acts thereon due to an undesired increase in the internal pressure of the engine main body, the tip end part of the inner flange section is pressed against the cylinder head, so that the seal performance can be enhanced.

Further, according to the seventh aspect of the present invention, the tip end part of the inner flange section is placed inside the inner wall surfaces of the cylinder head and the head cover in the state where the gasket is clamped between the cylinder head and the head cover. With this structure, when the gasket is deformed outward because a force for pushing outward acts thereon due to an undesired increase in the internal pressure of the engine main body, the tip end part of the inner flange section is pressed against the cylinder head, so that the seal performance can be enhanced. In addition, even if the head cover and the gasket are deformed by a certain factor such as the internal pressure, aging or the like, it is possible to enlarge an area in the gasket capable of coming into close contact with the mating surfaces of the cylinder head and the head cover.

### [BRIEF DESCRIPTION OF THE DRAWINGS]

[FIG. 1] FIG. 1 is a left side view of a two-wheeled motor vehicle of a first embodiment.
[FIG. 2] FIG. 2 is a view of a part of a power unit viewed from an arrow 2 direction in FIG. 1.
[FIG. 3] FIG. 3 is a view from an arrow 3 in FIG. 2.
[FIG. 4] FIG. 4 is a sectional view of a head cover and a cylinder head taken along a line 4-4 in FIG. 3.
[FIG. 5] FIG. 5 is a sectional view taken along a line 5-5 in FIG. 4.
[FIG. 6] FIG. 6 is a view from an arrow 6 in FIG. 3.
[FIG. 7] FIG. 7 is a sectional view taken along a line 7-7 in FIG. 6.
[FIG. 8] FIG. 8 is an enlarged view of a part indicated by an arrow 8 in FIG. 4.
[FIG. 9] FIG. 9 is a sectional view corresponding to FIG. 8, which illustrates a state where a gasket is deformed.
[FIG. 10] FIG. 10 is a sectional view corresponding to FIG. 8 in a second embodiment.
[FIG. 11] FiG. 11 is a sectional view corresponding to FiG. 8 in a third embodiment.
[FIG. 12] FIG. 12 is a sectional view corresponding to FIG. 8 in a fourth embodiment.

### [MODES FOR CARRYING OUT THE INVENTION]

Embodiments of the present invention are described with reference to the accompanying drawings. In the following description, terms such as front, rear, upper, lower, left and right indicate directions or positions viewed from a passenger who rides on a two-wheeled motor vehicle.

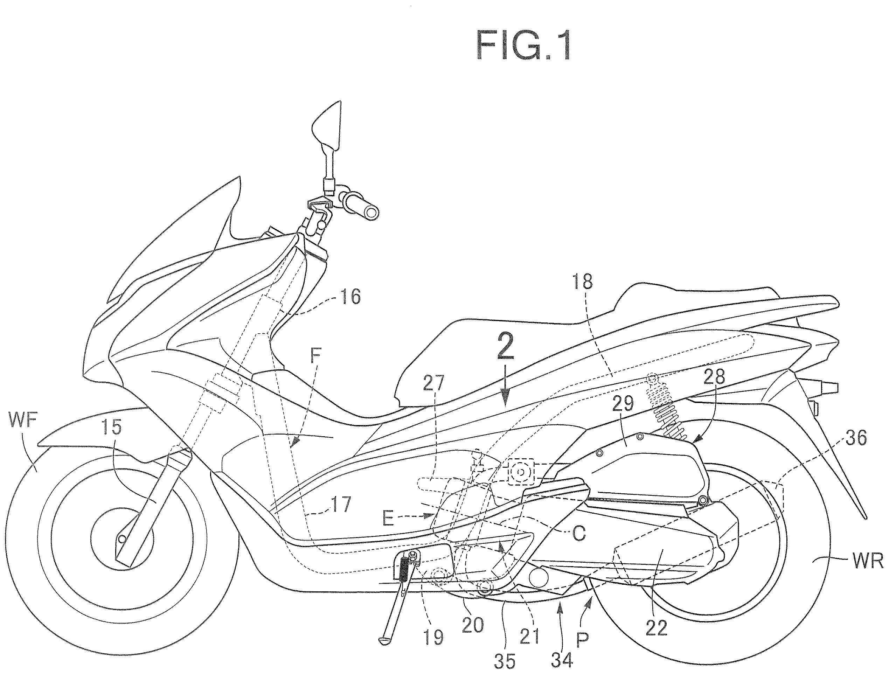

A first embodiment of the present invention is described with reference to FIGS. 1 to 9. To begin with, as illustrated in FIG. 1, a vehicle body frame F as a vehicle body frame F of a two-wheeled motor vehicle which is a straddle-riding type vehicle includes a head pipe 16 steerably supporting a front fork 15 pivotally supporting a front wheel WF, a pair of left and right main frames 17 extending downwardly rearward from the head pipe 16, and a pair of left and right rear frames 18 continued from rear end parts of the main frames 17 and extending upwardly rearward. A front part of a power unit P configured to generate power for driving a rear wheel WR is supported for up-and-down swinging movement via a link mechanism 20 by brackets 19 provided to lower rear end parts of the main frames 17. The rear wheel WR is supported pivotally by a rear end part of this power unit P.

The power unit P includes an internal combustion engine E and a transmission mechanism (not illustrated) provided between the internal combustion engine E and the rear wheel WR. The transmission mechanism is housed in a transmission case 22 continued to an engine main body 21 of the internal combustion engine E, and extending on the left side of the rear wheel War. The rear wheel WR is pivotally supported by a rear end part of the transmission case 22.

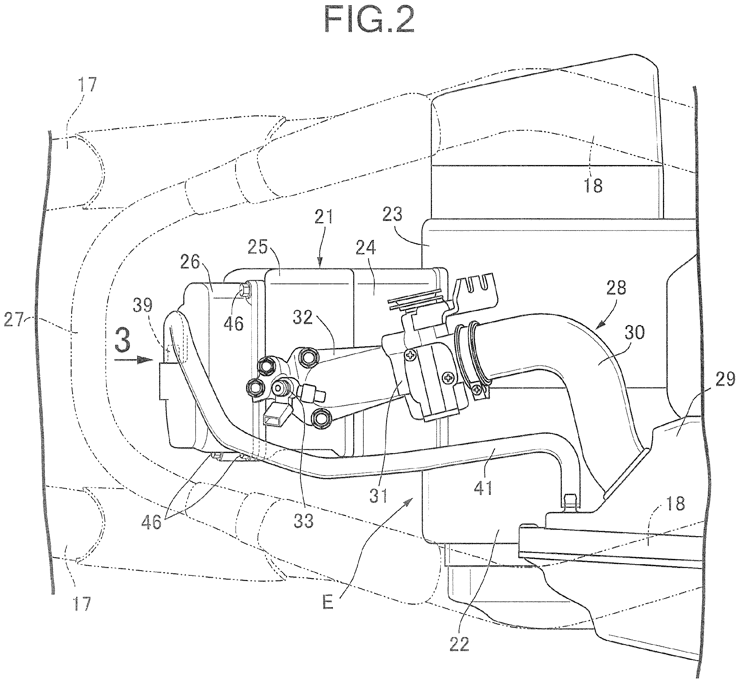

Also with reference to FIG. 2, the engine main body 21 includes a crank case 23, a cylinder block 24 joined to a front part of the crank case 23, a cylinder head 25 joined to a front end of the cylinder block 24, and a head cover 26 joined to the cylinder head 25 on the opposite side from the cylinder block 24. The transmission case 22 is continued to the crank case 23.

As illustrated in FIG. 1, this engine main body 21 is mounted on the two-wheeled motor vehicle with a cylinder axis C inclining frontward at a substantially horizontal level. A cross member 27 constituting a part of the vehicle body frame F and curving to expand frontward is provided between the pair of left and right rear frames so as to cover a front part of the engine main body 21 obliquely from an upper front side thereof.

An intake system 28 is connected to an upper side surface of the cylinder head 25. This intake system 28 includes an air cleaner 29 which is placed above the transmission case 22 so as to be supported by the transmission case 22, a connecting tube 30 including an upstream end part connected to the air cleaner 29, a throttle body 31 connected to a downstream end part of the connecting tube 30, and an intake pipe 32 provided between the cylinder head 25 and the throttle body 31. The intake pipe 32 is provided with a fuel injection valve 33.

In addition, an exhaust system 34 is connected to a lower side surface of the cylinder head 25. This exhaust system 34 includes an exhaust pipe 35 extending from the lower side surface of the cylinder head 25 to the right side of the rear wheel WR while running below the transmission case 22, and an exhaust muffler 36 connected to a downstream end part of the exhaust pipe 35 and placed on the right side of the rear wheel WR.

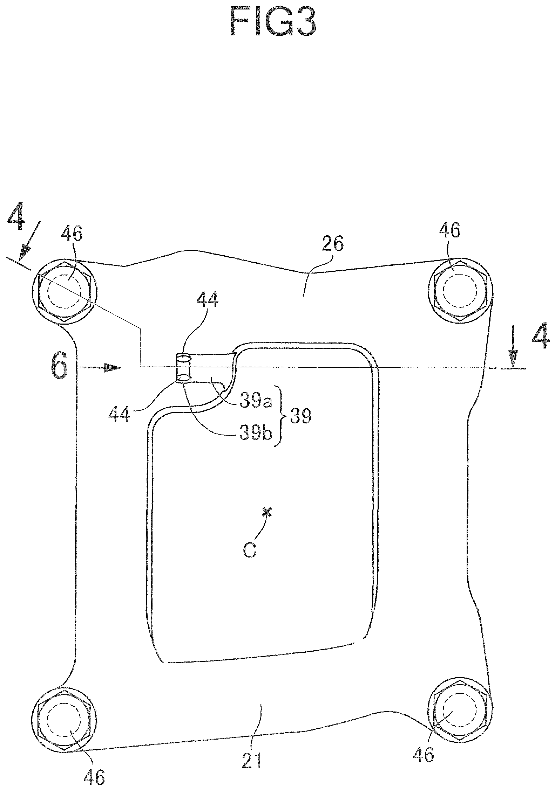

Also with reference to FIGS. 3 to 5, a breather chamber 40 for performing gas-liquid separation of a blowby gas generated in the engine main body 21 is formed inside the head cover 26. The head cover 26 is provided with an outlet pipe 39 for discharging the blowby gas from the breather chamber 40, and one end part of a hose 41 for guiding the blowby gas toward the air cleaner 29 is connected to the outlet pipe 39.

Here, the head cover 26 is made of a resin, and the outlet pipe 39 is also made of a resin. The breather chamber 40 is formed between the head cover 26 and a resin lid plate 42 welded to the head cover 26. A contour wall portion 26a and labyrinth wall portions 26b are formed integrally with an inner surface of the head cover 26 in a protruding manner. The contour wall portion 26a constitutes a contour of the breather chamber 40. The labyrinth wall portions 26b are placed at plural positions within an area surrounded by the contour wall portion 26a so as to form a labyrinth passage inside the breather chamber 40. The lid plate 42 is welded to the contour wall portion 26a and the labyrinth wall portions 26b.

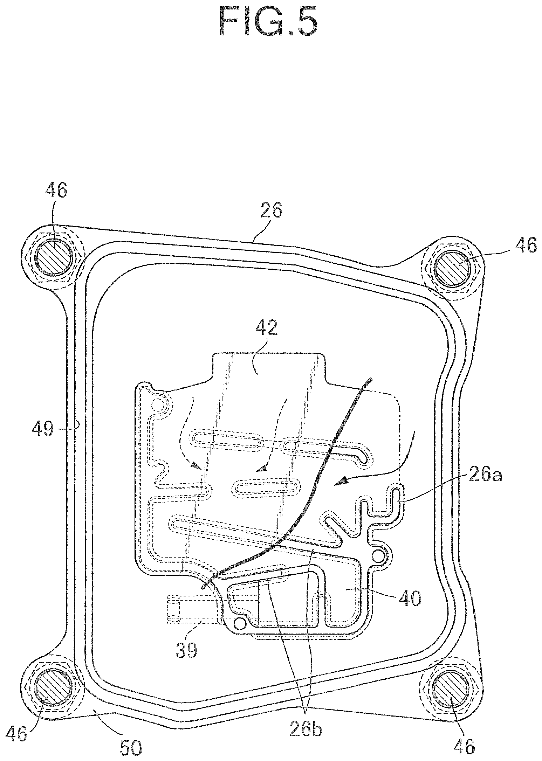

This breather chamber 40 is configured such that the blowby gas is introduced into the breather chamber 40, as shown by arrows in FIG. 5, then is separated into gas and liquid while passing through the labyrinth passage inside the breather chamber 40, and thereafter is discharged from the outlet pipe 39. The outlet pipe 39 is formed integrally with the head cover 26 and placed above the cylinder axis C so as to communicate with the breather chamber 40.

In addition, in order to prevent the outlet pipe 39 and the hose 41 from protruding upward even when the power unit P swings up and down, the outlet pipe 39 is formed integrally with the head cover 26 so as to face in one of vehicle width directions (to the right side in this embodiment) in a state where the engine main body 21 is mounted on the two-wheeied motor vehicle.

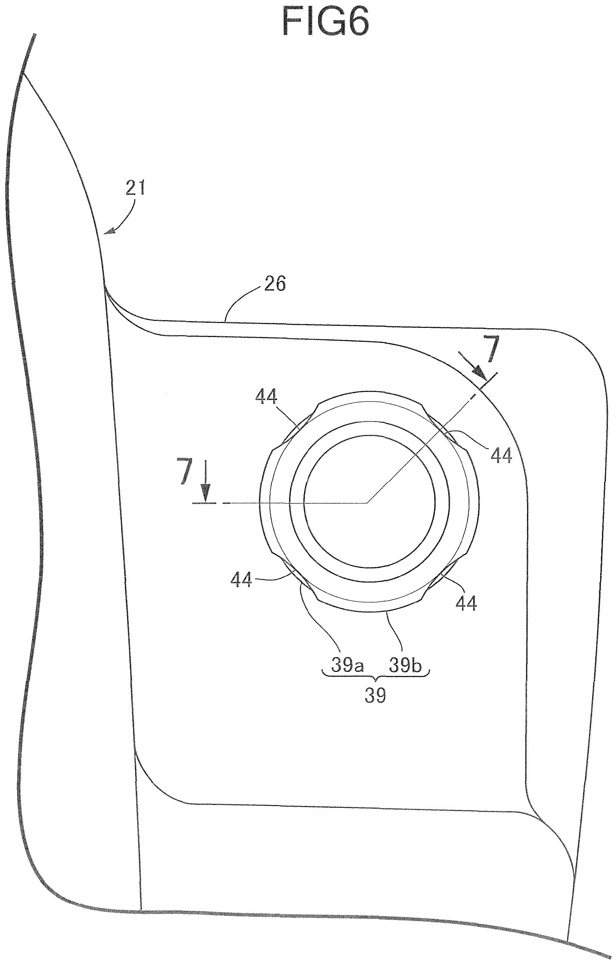

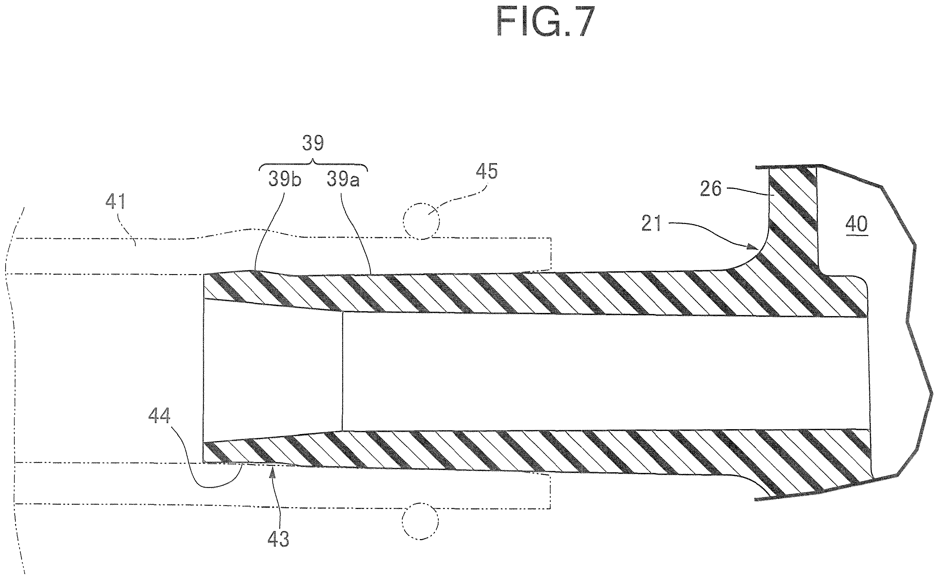

Also with reference to FIGS. 6 and 7, the outlet pipe 39 is provided with a release mechanism 43 configured to release the blowby gas by disengaging the hose 41 from the outlet pipe 39 at a time when the pressure of the blowby gas inside the engine main body 21 reaches or exceeds a predetermined pressure. In this embodiment, the release mechanism 43 includes grooves 44 which are formed at some parts within an area in an outer periphery of the outlet pipe 39 covered with one end part of the hose 41 and which communicate with inside of the breather chamber 40. The grooves 44 are formed in the outer periphery of the outlet pipe 39 at, for example, four locations arranged at equal intervals in a peripheral direction thereof.

The outlet pipe 39 is formed to integrally include a cylindrical portion 39a whose base end part is continued to an outer surface of the head cover 26, and a ring-shaped expanded portion 39b expanded radially outward from a tip end part of the cylindrical portion 39a. The grooves 44 are formed in the outer periphery of the ring-shaped expanded portion 39b. The grooves 44 are formed to be recessed from the outer periphery of the cylindrical portion 39a.

In addition, a clip 45 is attached to an overlapping part of the one end part of the hose 41 and the outlet pipe 39 where the one end part of the hose 41 covers the part of the outlet pipe 39 and thereby is connected to the outlet pipe 39. The clip 45 is placed closer to the head cover 26 than the release mechanism 43. In this embodiment, at a location corresponding to the cylindrical portion 39a of the outlet pipe 39, the clip 45 is attached to the overlapping part of the one end part of the hose 41 and the outlet pipe 39.

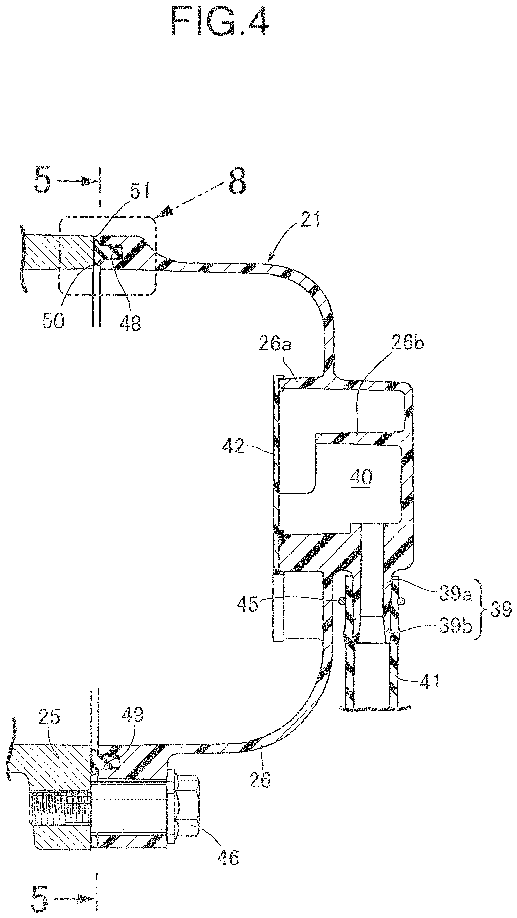

Here, the head cover 26 is joined to the cyirinder head 25 with plural, for example, four, bolts 46. As clearly illustrated in FIG. 4, a gasket 48 is clamped between the cylinder head 25 and the head cover 26. The predetermined pressure at which the release mechanism 43 releases the blowby gas to the outside by disengaging the hose 41 is set to be lower than a pressure of the blowby gas inside the engine main body 21 at which the gasket 48 loses its seal function. For example, the predetermined pressure is 170 kPa, whereas a seal maintaining limit pressure of the gasket 48 is 240 kPa.

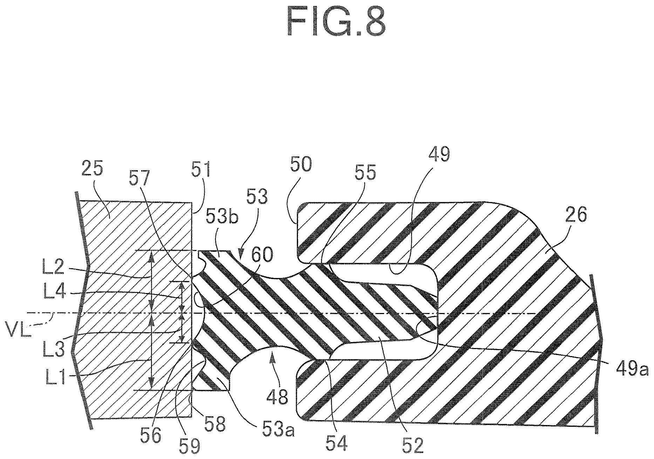

In FIG. 8, the head cover 26 has a first mating surface 50 formed to face the cylinder head 25, and the cylinder head 25 has a second mating surface 51 formed to face the first mating surface 50. The gasket 48 is clamped between the cylinder head 25 and the head cover 26 so as to be inserted into an insertion groove 49 formed in the first mating surface 50 which is one mating surface out of the first and second mating surfaces 50, 51, and to be in close contact with the second mating surface 51 which is the other mating surface out of the first and second mating surfaces 50, 51. The insertion groove 49 is formed to continue endlessly over an entire periphery of the head cover 26. Note that, in order to clearly present a shape of the gasket 48, FIG. 8 illustrates a state where the gasket 48 is not compressed in a clamping direction in which the gasket 48 is clamped between the cylinder head 25 and the head cover 26.

The gasket 48 integrally includes an insertion portion 52 inserted into the insertion groove 49 with one end part of the insertion portion 52 being in contact with a closed end wall 49a of the insertion groove 49, and a flange portion 53 continued from another end part of the insertion portion 52 and coming into close contact with the second mating surface 51.

The insertion portion 52 is formed in such a ring shape as to be inserted in the insertion groove 49, and bucking prevention protrusions 54, 55 are provided integrally with an inner periphery and an outer periphery of the insertion portion 52 in a protruding manner.

In addition, the flange portion 53 includes an inner flange section 53a and an outer flange section 53b. Here, a virtual line VL denotes a line passing through a widthwise center of the insertion portion 52 and extending in parallel with the clamping direction of the gasket. The inner flange section 53a extends from the virtual line VL toward an inner side of the cylinder head 25 and the head cover 26, while the outer flange section 53b extends from the virtual line VL toward an outer side of the cylinder head 25 and the head cover 26. An extension length L1 of the inner flange section 53a from the virtual line VL is set to be larger than an extension length L2 of the outer flange section 53b from the virtual line VL.

Moreover, the inner flange section 53a is provided with a first inner seal protrusion 56 protruding toward the second mating surface 51, and the outer flange section 53b is provided with an outer seal protrusion 57 protruding toward the second mating surface 51. Distances L3, L4 between the virtual line VL and the first inner seal protrusion 56 and the outer seal protrusion 57 are set to be substantially equal to each other. A distance from the first inner seal protrusion 56 to a tip end of the inner flange section 53a is set to be larger than a distance from the outer seal protrusion 57 to the tip end of the inner flange section 53a.

In addition, a tip end part of the inner flange section 53a is provided with a second inner seal protrusion 58 protruding toward the second mating surface 51, and a recess portion 59 recessed in a direction away from the second mating surface 51 is formed in the inner flange section 53a between the first inner seal protrusion 56 and the second inner seal protrusion 58. Note that the recess portion 59 is formed to be kept away from the second mating surface 51 even in a state where the gasket 48 is compressed in the clamping direction with the bolts 46 fastened.

Moreover, the recess portion 59 is formed to be recessed more deeply than a center recess portion 60 formed in the flange portion 53 between the first inner seal protrusion 56 and the outer seal protrusion 57.

Further, the tip end part of the inner flange section 53a is placed outside inner wall surfaces of the cylinder head 25 and the head cover 26 in a state where the gasket 48 is clamped between the cylinder head 25 and the head cover 26 (including both the state in FIG. 8, and the state where the gasket 48 is compressed in the clamping direction with the bolts 46 fastened).

Next, operations of the first embodiment are explained. The breather chamber 40 for gas-liquid separation of the blowby gas generated in the engine main body 21 is formed inside the head cover 26, and the one end part of the hose 41 for guiding the blowby gas toward the air cleaner 29 is connected to the outlet pipe 39 provided to the head cover 26 so as to discharge the blowby gas from the breather chamber 40. Then, the outlet pipe 39 is provided with the release mechanism 43 for releasing the blowby gas to the outside by disengaging the hose 41 from the outlet pipe 39 at a time when the pressure of the blowby gas inside the engine main body 21 reaches or exceeds the predetermined pressure. Thus, even if the internal pressure of the engine main body 21 increases to reach or exceed the predetermined pressure due to a difficulty in the smooth discharge of the blowby gas for some reasons such as hose clogging or the like, the pressure inside the engine main body 21 can be reduced by intentionally and forcibly releasing the blowby gas to the outside. Moreover, the blowby gas is separated into the gas and the liquid by passing through the breather chamber 40, and thereafter the gas is released from the outlet pipe 39. This effectively inhibits the oil or the like from leaking to the outside and thereby lessens the influence on the surrounding environment.

In addition, the engine main body 21 is mounted on the two-wheeled motor vehicle with its cylinder axis C inclining frontward, and the outlet pipe 39 is provided to the head cover 26 above the cylinder axis C. This enables effective gas-liquid separation, and more effectively inhibits the oil or the like from leaking to the outside even when the release mechanism 43 forcibly discharges the blowby gas from the outlet pipe 39 to the outside. Thus, the influence on the surrounding environment is further lessened.

Moreover, the predetermined pressure at which the release mechanism 43 works so as to intentionally and forcibly release the blowby gas from the outlet pipe 39 to the outside is set to be lower than the pressure of the blowby gas inside the engine main body 21 at which the gasket 48 clamped between the cylinder head 25 and the head cover 26 loses its seal function. This setting enables the release mechanism 43 to release the blowby gas to the outside by disengaging the hose 41 from the outlet pipe 39 before the gasket 48 loses the seal function due to the increase in the pressure inside the engine main body 21, and thereby makes it possible to prevent the blowby gas from leaking from an unintended part due to insufficient seal performance of the gasket 48.

Additionally, the release mechanism 43 is constituted by the grooves 44 communicating with the inside of the breather chamber 40 and formed at some parts within the area in the outer periphery of the outlet pipe 39 covered with the one end part of the hose 41. Thus, the release mechanism 43 can be easily constructed by forming the grooves 44 at some parts within the area in the outer periphery of the outlet pipe 39 covered with the one end part of the hose 41. This mechanism causes the pressure of the blowby gas introduced into the grooves 44 to effectively act on an inner periphery of the hose 41, so that the hose 41 can be expanded so as to be disengaged from the outlet pipe 39.

Further, the outlet pipe 39 is formed to integrally include the cylindrical portion 39a whose base end part is continued to the outer surface of the head cover 26, and the ring-shaped expanded portion 39b expanded radially outward from the tip end part of the cylindrical portion 39a. Then, the grooves 44 are formed in the outer periphery of the ring-shaped expanded portion 39b. Thus, the ring-shaped expanded portion 39b makes it possible to secure interference with a joint part of the hose 41, and to inhibit the outlet pipe 39 from being reduced in stiffness due to the formation of the grooves 44. Moreover, the grooves 44 are recessed further from the outer periphery of the cylindrical portion 39a, and can easily guide the blowby gas to between the hose 41 and the outlet pipe 39.

Then, the clip 45, which is placed closer to the head cover 26 than the release mechanism 43, is attached to the overlapping part of the outlet pipe 39 and the one end part of the hose 41 connected to the outlet pipe 39 by covering the part of the outlet pipe 39. Thus, in the case where the clip 45 fixes the one end part of the hose 41 to the outlet pipe 39, the clip 45 does not disturb the release mechanism 43, which enables the function of the release mechanism 43 to be secured.

In addition, the gasket 48 inserted into the insertion groove 49 formed in the first mating surface 50 out of the first mating surface 50 included in the head cover 26 and the second mating surface 51 included in the cylinder head 25 is clamped between the cylinder head 25 and the head cover 26. This gasket 48 integrally includes the insertion portion 52 inserted into the insertion groove 49 with its one end part being in contact with the closed end wall 49a of the insertion groove 49, and the flange portion 53 continued from the other end part of the insertion portion 52 and coming into close contact with the second mating surface 51. The flange portion 53 includes the inner flange section 53a extending toward the inner side of the cylinder head 25 and the head cover 26 from the virtual line VL, which passes through the widthwise center of the insertion portion 52 and extends in parallel with the clamping direction of the gasket 48, and the outer flange section 53b extending from the virtual line VL toward the outer side of the cylinder head 25 and the head cover 26. Then, the extension length L1 of the inner flange section 53a from the virtual line VL is set to be larger than the extension length L2 of the outer flange section 53b from the virtual line VL. Hence, even if an undesired increase in the pressure inside the engine main body 21 causes a force for pushing outward to act on the gasket 48, the inner flange section 53a can maintain the seal performance effectively by being kept in close contact with the second mating surface 51. In other words, this structure makes it possible to enlarge an area in the gasket 48 capable of coming into close contact with the second mating surface 51, and thereby to secure and maintain the seal performance even if the head cover 26 and the gasket 48 are deformed by a certain factor such as the internal pressure, aging or the like. Thus, the pressure resistance of the gasket 48 can be enhanced.

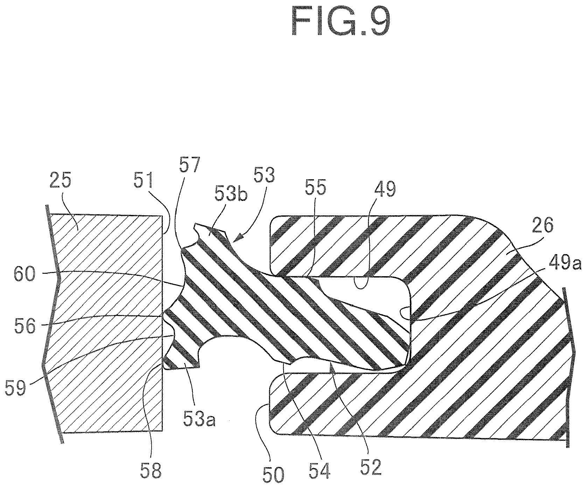

Moreover, the inner flange section 53a is provided with the first inner seal protrusion 56 protruding toward the second mating surface 51, and the outer flange section 53b is provided with the outer seal protrusion 57 protruding toward the second mating surface 51. Then, the distances L3, L4 between the virtual line VL, and the first inner seal protrusion 56 and the outer seal protrusion 57 are set to be substantially equal to each other in such a way that the distance from the first inner seal protrusion 56 to the tip end of the inner flange section 53a is made larger than the distance from the outer seal protrusion 57 to the tip end of the outer flange section 53b. Thus, while the gasket 48 is normally clamped between the cylinder head 25 and the head cover 26, the first inner seal protrusion 56 and the outer seal protrusion 57 secure the seal performance equal between the inside and the outside of the insertion portion 52 and thereby achieve the sealing with high contact pressure. On the other hand, as illustrated in FIG. 9, when an undesired increase in the internal pressure of the engine main body 21 causes a force for pushing outward to act on the gasket 48, the relatively long area from the first inner seal protrusion 56 to the tip end of the inner flange section 53a secures the seal performance by coming into close contact with the second mating surface 51.

Further, the tip end part of the inner flange section 53a is provided with the second inner seal protrusion 58 protruding toward the second mating surface 51, and the recess portion 59 recessed in the direction away from the second mating surface 51 is formed in the inner flange section 53a between the first inner seal protrusion 56 and the second inner seal protrusion 58. Thus, as illustrated in FIG. 9, when the gasket 48 is deformed outward because a force for pushing outward acts thereon due to an undesired increase in the internal pressure of the engine main body 21, the recess potion 59 thus formed produces the following effects: the inner flange section 53a can be flexibly bent to easily bring the second inner seal protrusion 58 into close contact with the second mating surface 51; and the inner flange section 53a, having a smaller contact area with the second mating surface 51, can increase the contact pressure and thereby maintain the seal performance favorably.

In addition, the recess portion 59 is formed to be recessed more deeply than the center recess portion 60 formed in the flange portion 53 between the first inner sea! protrusion 56 and the outer seal protrusion 57. This structure enables more flexible bending of a tip end side of the inner flange section 53a, so that it is easier to bring the second inner seal protrusion 58 into close contact with the second mating surface 51. Moreover, in a state where the gasket 48 is deformed outward, that structure also facilitates formation of a space between the first and second inner seal protrusions 56, 58, and thereby further reduces the contact area of the inner flange section 53a with the second mating surface 51 to increase the contact pressure, so that the seal performance can be maintained more favorably.

In addition, the tip end part of the inner flange section 53a is placed outside the inner wall surfaces of the cylinder head 25 and the head cover 26 in a state where the gasket 48 is clamped between the cylinder head 25 and the head cover 26. Thus, the gasket can be prevented from interfering with a valve train and the like inside the engine main body 21, and from influencing flows of oil running on the inner wall surfaces of the head cover 25 and the cylinder head 26.

Furthermore, since the head cover 26 is made of the resin, the head cover 26 and accordingly the engine main body 21 can be reduced in weight. Meanwhile, although use of a resin material may cause influence such as deformation or the like of the head cover 26, the seal performance of the gasket 48 can be effectively secured against such an influence. Moreover, since the outlet pipe 39 is formed integrally with the head cover 26 made of the synthetic resin, the release mechanism 43 is also easy to form.

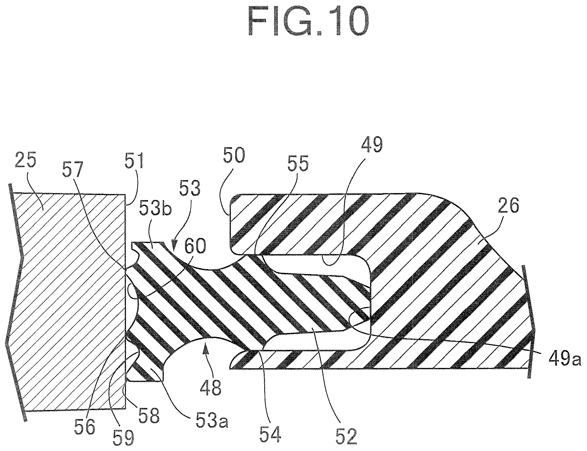

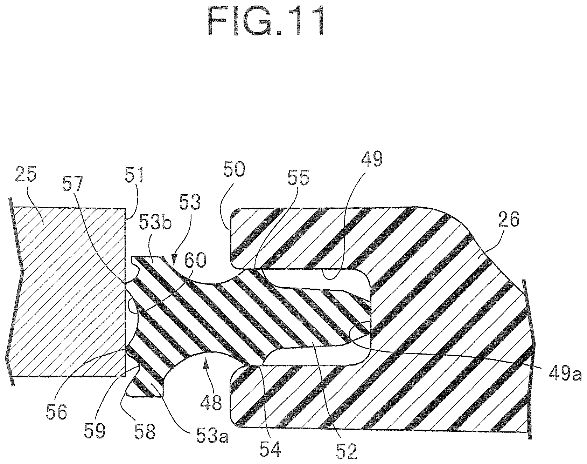

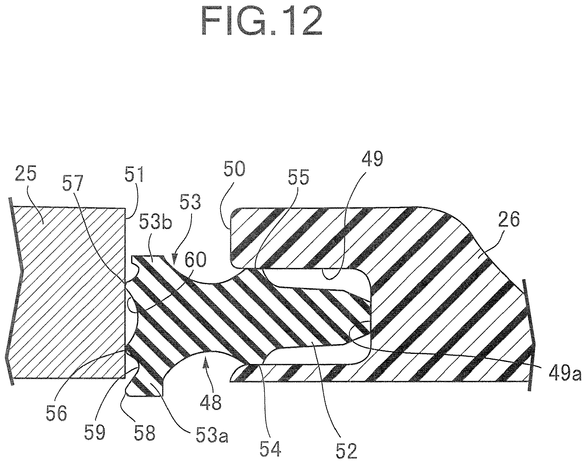

Next, description is provided for a second embodiment with reference to FIG. 10, a third embodiment with reference to FIG. 11, and a fourth embodiment with reference to FIG. 12. In the description of the second to fourth embodiments, the portions corresponding to those in the first embodiment are described with the same reference numerals assigned.

As the second embodiment of the present invention, as illustrated in FIG. 10, a tip end part of an inner flange section 53a of a gasket 48 clamped between a cylinder head 25 and a head cover 26 may be placed outside an inner wall surface of the cylinder head 25 and inside an inner wall surface of the head cover 26 in a state where the gasket 48 is clamped between the cylinder head 25 and the head cover 26. With this structure, when the gasket 48 is deformed outward because a force for pushing outward acts thereon due to an undesired increase in the internal pressure of an engine main body 21, the tip end part of the inner flange section 53a is pressed against the cylinder head 25, so that the seal performance can be enhanced.

As the third embodiment of the present invention, as illustrated in FIG. 11, a tip end part of an inner flange section 53a of a gasket 48 clamped between a cylinder head 25 and a head cover 26 may be placed inside an inner wall surface of the cylinder head 25 and outside an inner wall surface of the head cover 26 in a state where the gasket 48 is clamped between the cylinder head 25 and the head cover 26. With this structure, when the gasket 48 is deformed outward because a force for pushing outward acts thereon due to an undesired increase in the internal pressure of an engine main body 21, the tip end part of the inner flange section 53a is pressed against the cylinder head 25, so that the seal performance can be enhanced.

As the fourth embodiment of the present invention, as illustrated in FIG. 12, a tip end part of an inner flange section 53a of a gasket 48 clamped between a cylinder head 25 and a head cover 26 may be placed inside inner wall surfaces of the cylinder head 25 and the head cover 26 in a state where the gasket 48 is clamped between the cylinder head 25 and the head cover 26. With this structure, when the gasket 48 is deformed outward because a force for pushing outward acts thereon due to an undesired increase in the internal pressure of an engine main body 21, the tip end part of the inner flange section 53a is pressed against the cylinder head 25, so that the seal performance can be enhanced. In addition, even if the head cover 26 and the gasket 48 are deformed by a certain factor such as the internal pressure, aging or the like, it is possible to enlarge an area in the gasket 48 capable of coming into close contact with mating surfaces 51, 50 of the cylinder head 25 and the head cover 26.

Hereinabove, the embodiments of the present invention have been described. It should be noted that the present invention is not limited to the foregoing embodiments, but may be altered in design in various ways without departing from the invention specified in the scope of claims.

### [DESCRIPTION OF REFERENCE NUMERALS AND SYMBOLS]

- 21: engine main body
- 25: cylinder head
- 26: head cover
- 48: gasket
- 49: insertion groove
- 49a: closed end wall
- 50, 51: mating surface
- 52: insertion portion
- 53: flange portion
- 53a: inner flange section
- 53b: outer flange section
- 56: first inner seal protrusion
- 57: outer seal protrusion
- 58: second inner seal protrusion
- 59: recess portion
- 60: center recess portion
- L1: extension length of inner flange section from virtual line
- L2: extension length of outer flange section from virtual line
- L3: distance between virtual line and first inner seal protrusion
- L4: distance between virtual line and outer seal protrusion
- VL: virtual line

## Claims

1. A gasket for an internal combustion engine, the gasket (48) being insertable into an insertion groove (49) formed in one (50) of mating surfaces (51, 50) of a cylinder head (25) and a head cover (26) which constitute a part of an engine main body (21) and are joined to each other, the gasket (48) being capable of being clamped between the cylinder head (25) and the head cover (26) so that the gasket (48) is in close contact with the other (51) of the mating surfaces (51, 50) of the cylinder head (25) and the head cover (26), wherein
the gasket (48) comprises an insertion portion (52) and a flange portion (53) which are integrally formed, the insertion portion (52) being insertable into the insertion groove (49) with one end part of the insertion portion (52) being in contact with a closed end wall (49a) of the insertion groove (49), the flange portion (53) continued from another end part of the insertion portion (52) and coming into close contact with the other mating surface (51), the flange portion (53) including: an inner flange section (53a) extending toward an inner side of the cylinder head (25) and the head cover (26), when the insertion portion (52) is inserted into the insertion groove (49), from a virtual line (VL) which passes through a widthwise center of the insertion portion (52) and in parallel with a clamping direction of the gasket (48); and an outer flange section (53b) extending toward an outer side of the cylinder head (25) and the head cover (26), when the insertion portion (52) is inserted into the insertion groove (49), from the virtual line (VL), and
an extension length (L1) of the inner flange section (53a) from the virtual line (VL) is set to be larger than an extension length (L2) of the outer flange section (53b) from the virtual line (VL), **characterized in that**
when the gasket (48) is in a state of being clamped between the cylinder head (25) and the head cover (26)
the inner flange section (53a) is provided with a first inner seal protrusion (56) protruding toward the other mating surface (51), the outer flange section (53b) is provided with an outer seal protrusion (57) protruding toward the other mating surface (51), distances (L3, L4) between the virtual line (VL), and the first inner seal protrusion (56) and the outer seal protrusion (57) are set to be substantially equal to each other, and
a distance from the first inner seal protrusion (56) to a tip end of the inner flange section (53a) is set to be larger than a distance from the outer seal protrusion (57) to a tip end of the outer flange section (53b),
a tip end part of the inner flange section (53a) is provided with a second inner seal protrusion (58) protruding toward the other mating surface (51), and
a recess portion (59) recessed in a direction away from the other mating surface (51) is formed in the inner flange section (53a) between the first inner seal protrusion (56) and the second inner seal protrusion (58).

2. The gasket for an internal combustion engine according to claim 1, wherein
the recess portion (59) is formed to be recessed more deeply than a center recess portion (60) formed in the flange portion (53) between the first inner seal protrusion (56) and the outer seal protrusion (57).

3. The gasket for an internal combustion engine according to claim 1 or 2, wherein the head cover (26) is made of a resin.

4. The gasket for an internal combustion engine according to any one of claims 1 to 3, wherein a tip end part of the inner flange section (53a) is placed outside inner wall surfaces of the cylinder head (25) and the head cover (26) in a state where the gasket (48) is clamped between the cylinder head (25) and the head cover (26).

5. The gasket for an internal combustion engine according to any one of claims 1 to 3, wherein a tip end part of the inner flange section (53a) is placed outside an inner wall surface of the cylinder head (25) and inside an inner wall surface of the head cover (26) in a state where the gasket (48) is clamped between the cylinder head (25) and the head cover (26).

6. The gasket for an internal combustion engine according to any one of claims 1 to 3, wherein a tip end part of the inner flange section (53a) is placed inside an inner wall surface of the cylinder head (25) and outside an inner wall surface of the head cover (26) in a state where the gasket (48) is clamped between the cylinder head (25) and the head cover (26).

7. The gasket structure in an internal combustion engine according to any one of claims 1 to 3, wherein a tip end part of the inner flange section (53a) is placed inside inner wall surfaces of the cylinder head (25) and the head cover (26) in a state where the gasket (48) is clamped between the cylinder head (25) and the head cover (26).

## Patentansprüche

1. Dichtung für einen Verbrennungsmotor, wobei die Dichtung (48) in eine Einführnut (49) einführbar ist, welche in einer (50) von zusammenwirkenden Flächen (51, 50) eines Zylinderkopfs (25) und einer Kopfabdeckung (26) gebildet ist, welche einen Teil eines Motor-Hauptkörpers (21) bilden und miteinander verbunden sind, wobei die Dichtung (48) in der Lage ist, zwischen den Zylinderkopf (25) und die Kopfabdeckung (26) eingeklemmt zu werden, so dass die Dichtung (48) in engem Kontakt mit der anderen (51) der zusammenwirkenden Flächen (51, 50) des Zylinderkopfs (25) und der Kopfabdeckung (26) ist, wobei
die Dichtung (48) einen Einführabschnitt (52) und einen Flanschabschnitt (53) umfasst, welche integral gebildet sind, wobei der Einführabschnitt (52) in die Einführnut (49) einführbar ist, wobei ein Endteil des Einführabschnitts (52) in Kontakt mit einer geschlossenen Endwand (49a) der Einführnut (49) ist, wobei der Flanschabschnitt (53) von einem anderen Endteil des Einführabschnitts (52) fortgesetzt ist und in engen Kontakt mit der anderen zusammenwirkenden Fläche (51) kommt, wobei der Flanschabschnitt (53) umfasst: einen inneren Flanschabschnitt (53a), welcher sich in Richtung einer inneren Seite des Zylinderkopfs (25) und der Kopfabdeckung (26), wenn der Einführabschnitt (52) in die Einführnut (49) eingeführt ist, von einer virtuellen Linie (VL) erstreckt, welche durch ein Zentrum in Breitenrichtung des Einführabschnitts (52) und parallel zu einer Klemmrichtung der Dichtung hindurchtritt; und einen äußeren Flanschabschnitt (53b), welcher sich in Richtung einer äußeren Seite des Zylinderkopfs (25) und der Kopfabdeckung (26), wenn der Einführabschnitt (52) in die Einführnut (49) eingeführt ist, von der virtuellen Linie (VL) erstreckt, und eine Erstreckungslänge (L1) des inneren Flanschabschnitts (53a) von der virtuellen Linie (VL) dazu festgelegt ist, größer zu sein als eine Erstreckungslänge (L2) des äußeren Flanschabschnitts (53b) von der virtuellen Linie (VL), **dadurch gekennzeichnet, dass**
wenn die Dichtung (48) in einem Zustand ist, in welchem sie zwischen dem Zylinderkopf (25) und der Kopfabdeckung (26) eingeklemmt ist, der innere Flanschabschnitt (53a) mit einem ersten inneren Dichtungsvorsprung (56) bereitgestellt ist, welcher in Richtung der anderen zusammenwirkenden Fläche (51) vorsteht,
wobei der äußere Flanschabschnitt (53b) mit einem äußeren Dichtungsvorsprung (57) bereitgestellt ist, welcher in Richtung der anderen zusammenwirkenden Fläche (51) vorsteht,
Abstände (L3, L4) zwischen der virtuellen Linie (VL) und dem ersten inneren Dichtungsvorsprung (56) und dem äußeren Dichtungsvorsprung (57) dazu festgelegt sind, zueinander im Wesentlichen gleich zu sein, und
ein Abstand von dem ersten inneren Dichtungsvorsprung (56) zu einem Spitzenende des inneren Flanschabschnitts (53a) dazu festgelegt ist, größer als ein Abstand von dem anderen Dichtungsvorsprung (57) zu einem Spitzenende des äußeren Flanschabschnitts (53b) zu sein,
ein Spitzenendteil des inneren Flanschabschnitts (53a) mit einem zweiten inneren Dichtungsvorsprung (58) bereitgestellt ist, welcher in Richtung der anderen zusammenwirkenden Fläche (51) vorsteht, und
ein Ausnehmungsabschnitt (59), welcher in eine Richtung weg von der anderen zusammenwirkenden Fläche (51) ausgenommen ist, in dem inneren Flanschabschnitt (53a) zwischen dem ersten inneren Dichtungsvorsprung (56) und dem zweiten inneren Dichtungsvorsprung (58) gebildet ist.

2. Dichtung für einen Verbrennungsmotor nach Anspruch 1, wobei der Ausnehmungsabschnitt (59) dazu gebildet ist, tiefer ausgenommen zu sein als ein zentraler Ausnehmungsabschnitt (60), welcher in dem Flanschabschnitt (53) zwischen dem ersten inneren Dichtungsvorsprung (56) und dem äußeren Dichtungsvorsprung (57) gebildet ist.

3. Dichtung für einen Verbrennungsmotor nach Anspruch 1 oder 2, wobei die Kopfabdeckung (26) aus einem Harz hergestellt ist.

4. Dichtung für einen Verbrennungsmotor nach einem der Ansprüche 1 bis 3, wobei ein Spitzenendteil des inneren Flanschabschnitts (53a) außerhalb inneren Wandflächen des Zylinderkopfs (25) und der Kopfabdeckung (26) in einem Zustand platziert ist, in dem die Dichtung (48) zwischen dem Zylinderkopf (25) und der Kopfabdeckung (26) eingeklemmt ist.

5. Dichtung für einen Verbrennungsmotor nach einem der Ansprüche 1 bis 3, wobei ein Spitzenendteil des inneren Flanschabschnitts (53a) außerhalb einer inneren Wandfläche des Zylinderkopfs (25) und innerhalb einer inneren Wandfläche der Kopfabdeckung (26) in einem Zustand platziert ist, in dem die Dichtung (48) zwischen dem Zylinderkopf (25) und der Kopfabdeckung (26) eingeklemmt ist.

6. Dichtung für einen Verbrennungsmotor nach einem der Ansprüche 1 bis 3, wobei ein Spitzenendteil des inneren Flanschabschnitts (53a) innerhalb einer inneren Wandfläche des Zylinderkopfs (25) und außerhalb einer inneren Wandfläche der Kopfabdeckung (26) in einem Zustand platziert ist, in dem die Dichtung (48) zwischen dem Zylinderkopf (25) und der Kopfabdeckung (26) eingeklemmt ist.

7. Dichtungsstruktur in einem Verbrennungsmotor nach einem der Ansprüche 1 bis 3, wobei ein Spitzenendteil des inneren Flanschabschnitts (53a) innerhalb innerer Wandflächen des Zylinderkopfs (25) und der Kopfabdeckung (26) in einem Zustand platziert ist, in dem die Dichtung (48) zwischen dem Zylinderkopf (25) und der Kopfabdeckung (26) eingeklemmt ist.

## Revendications

1. Joint d'étanchéité pour un moteur à combustion interne, le joint d'étanchéité (48) étant insérable dans une rainure d'insertion (49) formée dans une (50) de surfaces d'accouplement (51, 50) d'une tête de cylindre (25) et d'un couvercle de tête (26) qui constituent une partie d'un corps principal de moteur (21) et sont joints l'un à l'autre, le joint d'étanchéité (48) étant apte à être serré entre la tête de cylindre (25) et le couvercle de tête (26) de sorte que le joint d'étanchéité (48) soit en contact proche avec l'autre (51) des surfaces d'accouplement (51, 50) de la tête de cylindre (25) et du couvercle de tête (26), dans lequel
le joint d'étanchéité (48) comprend une partie d'insertion (52) et une partie de bride (53) qui sont intégralement formées, la partie d'insertion (52) étant insérable dans la rainure d'insertion (49) avec une partie d'extrémité de la partie d'insertion (52) qui est en contact avec une paroi d'extrémité fermée (49a) de la rainure d'insertion (49), la partie de bride (53) étant continuée d'une autre partie d'extrémité de la partie d'insertion (52) et venant en contact proche avec l'autre surface d'accouplement (51), la partie de bride (53) incluant : une section de bride intérieure (53a) s'étendant vers un côté intérieur de la tête de cylindre (25) et du couvercle de tête (26) lorsque la partie d'insertion (52) est insérée dans la rainure d'insertion (49), depuis une ligne virtuelle (VL) qui passe par un centre de largeur de la partie d'insertion (52) et en parallèle d'une direction de serrage du joint d'étanchéité (48) ; et une section de bride extérieure (53b) s'étendant vers un côté extérieur de la tête de cylindre (25) et du couvercle de tête (26) lorsque la partie d'insertion (52) est insérée dans la rainure d'insertion (49), depuis la ligne virtuelle (VL), et
une longueur d'extension (L1) de la section de bride intérieure (53a) depuis la ligne virtuelle (VL) est réglée pour être plus grande qu'une longueur d'extension (L2) de la section de bride extérieure (53b) depuis la ligne virtuelle (VL), **caractérisé en ce que**
lorsque le joint d'étanchéité (48) est dans un état serré entre la tête de cylindre (25) et le couvercle de tête (26),
la section de bride intérieure (53a) est dotée d'une première saillie de joint intérieur (56) faisant saillie vers l'autre surface d'accouplement (51),
la section de bride extérieure (53b) est dotée d'une saillie de joint extérieur (57) faisant saillie vers l'autre surface d'accouplement (51),
des distances (L3, L4) entre la ligne virtuelle (VL) et la première saillie de joint intérieur (56) et la saillie de joint extérieur (57) sont réglées pour être sensiblement égales l'une à l'autre et
une distance entre la première saillie de joint intérieur (56) et une extrémité de bout de la section de bride intérieure (53a) est réglée pour être plus grande qu'une distance entre la saillie de joint extérieur (57) et une extrémité de bout de la section de bride extérieure (53b),
une partie d'extrémité de bout de la section de bride intérieure (53a) est dotée d'une seconde saillie de joint intérieur (58) faisant saillie vers l'autre surface d'accouplement (51), et
une partie d'évidement (59) évidée dans une direction loin de l'autre surface d'accouplement (51) est formée dans la section de bride intérieure (53a) entre la première saillie de joint intérieur (56) et la seconde saillie de joint intérieur (58).

2. Joint d'étanchéité pour un moteur à combustion interne selon la revendication 1, dans lequel
la partie d'évidement (59) est formée pour être évidée plus profondément qu'une partie d'évidement central (60) formée dans la partie de bride (53) entre la première saillie de joint intérieur (56) et la saillie de joint extérieur (57).

3. Joint d'étanchéité pour un moteur à combustion interne selon la revendication 1 ou 2, dans lequel
le couvercle de tête (26) est réalisé avec une résine.

4. Joint d'étanchéité pour un moteur à combustion interne selon l'une quelconque des revendications 1 à 3, dans lequel
une partie d'extrémité de bout de la section de bride intérieure (53a) est placée en dehors de surfaces de paroi intérieure de la tête de cylindre (25) et du couvercle de tête (26) dans un état où le joint d'étanchéité (48) est serré entre la tête de cylindre (25) et le couvercle de tête (26).

5. Joint d'étanchéité pour un moteur à combustion interne selon l'une quelconque des revendications 1 à 3, dans lequel
une partie d'extrémité de bout de la section de bride intérieure (53a) est placée à l'extérieur d'une surface de paroi intérieure de la tête de cylindre (25) et à l'intérieur d'une surface de paroi intérieure du couvercle de tête (26) dans un état où le joint d'étanchéité (48) est serré entre la tête de cylindre (25) et le couvercle de tête (26).

6. Joint d'étanchéité pour un moteur à combustion interne selon l'une quelconque des revendications 1 à 3, dans lequel
une partie d'extrémité de bout de la section de bride intérieure (53a) est placée dans une surface de paroi intérieure de la tête de cylindre (25) et en dehors d'une surface de paroi intérieure du couvercle de tête (26) dans un état où le joint d'étanchéité (48) est serré entre la tête de cylindre (25) et le couvercle de tête (26).

7. Joint d'étanchéité pour un moteur à combustion interne selon l'une quelconque des revendications 1 à 3, dans lequel
une partie d'extrémité de bout de la section de bride intérieure (53a) est placée dans des surfaces de paroi intérieure de la tête de cylindre (25) et du couvercle de tête (26) dans un état où le joint d'étanchéité (48) est serré entre la tête de cylindre (25) et le couvercle de tête (26).
